(19) Europäisches Patentamt / European Patent Office / Office européen des brevets

(11) **EP 2 483 911 B1**

(12) **EUROPÄISCHE PATENTSCHRIFT**

(45) Veröffentlichungstag und Bekanntmachung des Hinweises auf die Patenterteilung:
**10.07.2019 Patentblatt 2019/28**

(21) Anmeldenummer: **10771673.0**

(22) Anmeldetag: **26.08.2010**

(51) Int Cl.:
*H01J 49/00* *(2006.01)*      *H01J 49/16* *(2006.01)*
*G01N 27/64* *(2006.01)*

(86) Internationale Anmeldenummer:
**PCT/EP2010/062510**

(87) Internationale Veröffentlichungsnummer:
**WO 2011/039010 (07.04.2011 Gazette 2011/14)**

(54) **IONISATIONSVERFAHREN, IONENQUELLE SOWIE VERWENDUNGEN DERSELBEN BEI DER IONENMOBILITÄTSSPEKTROMETRIE**

IONIZATION METHOD, ION SOURCE AND USES OF THE SAME IN ION MOBILITY SPECTROMETRY

PROCÉDÉ D'IONISATION, DISPOSITIF DE PRODUCTION D'IONS ET LEURS UTILISATIONS EN SPECTROSCOPIE À MOBILITÉ IONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.09.2009 DE 102009043739**
**01.10.2009 DE 102009048063**

(43) Veröffentlichungstag der Anmeldung:
**08.08.2012 Patentblatt 2012/32**

(73) Patentinhaber: **Spherea GmbH**
**89077 Ulm (DE)**

(72) Erfinder:
• GÖBEL, Johann
81547 München (DE)
• LANGMEIER, Andreas
80634 München (DE)
• KESSLER, Matthias
81541 München (DE)

(74) Vertreter: **Mazabraud, Xavier et al**
**Cabinet Moutard**
**35, rue de la Paroisse**
**78000 Versailles (FR)**

(56) Entgegenhaltungen:
**DE-A1- 10 247 272      US-A- 4 707 602**
**US-B1- 6 300 626**

• **CLOWERS B H ET AL: "Hadamard Transform Ion Mobility Spectrometry", ANALYTICAL CHEMISTRY, AMERICAN CHEMICAL SOCIETY, US, Bd. 78, Nr. 1, 1. Januar 2006 (2006-01-01), Seiten 44-51, XP002540576, ISSN: 0003-2700, DOI: DOI:10.1021/AC050615K [gefunden am 2005-11-25]**
• **Brian H Clowers ET AL: "Pseudorandom sequence modifications for ion mobility orthogonal time-of-flight mass spectrometry", Analytical chemistry, 1 April 2008 (2008-04-01), pages 2464-2473, XP055439202, United States DOI: 10.1021/ac7022712 Retrieved from the Internet: URL:https://www.ncbi.nlm.nih.gov/pmc/artic les/PMC2516355/pdf/nihms-59170.pdf [retrieved on 2018-01-09]**

**Beschreibung**

Die Erfindung betrifft ein Ionisationsverfahren für ein mittels Ionenmobilitätsspektrometrie zu untersuchendes Analyt. Weiter betrifft die Erfindung ein Ionenmobilitätsspektrometrieverfahren zur Bestimmung eines Analyts mittels Ionenmobilitätsspektrometrie unter Verwendung eines solchen Ionisationsverfahrens. Weiter betrifft die Erfindung eine Ionenerzeugungsvorrichtung für ein Ionenmobilitätsspektrometer. Schließlich betrifft die Erfindung ein eine solche Ionenerzeugungsvorrichtung verwendendes Ionenmobilitätsspektrometer.

Die Erfindung liegt auf dem Gebiet der Ionenmobilitätsspektrometrie die, in jüngster Zeit immer größere Verbreitung zur Detektion sehr geringer Spuren von Analyten gefunden hat. Insbesondere wird die Ionenmobilitätsspektrometrie (im Folgenden kurz auch IMS genannt) zur Detektion von Drogen, Explosivstoffen und chemischen Kampfstoffen eingesetzt. Vom Grundprinzip her wird ein in der Regel gasförmiger Probenstoff einem Ionisationsverfahren unterzogen, woraufhin die individuellen ionisierten Komponenten der Probenmischung dadurch getrennt werden, dass sie durch ein elektrischen Feld beschleunigt werden und eine substanzspezifische bzw. molekülspezifische Flugzeit über eine bestimmte Messstrecke in einem Driftgas - eventuell im Gegenstrom des Driftgases - gemessen wird.

Die als Messstrecke fungierende Driftstrecke befindet sich in der Regel innerhalb einer Driftröhre, an deren Beginn eine Gate-Elektrode (auch Ionentor genannt) angeordnet ist. Am anderen Ende der Driftstrecke befindet sich ein Ionenkollektor. Bei klassischen Ionenmobilitätsspektrometern wird die Gate-Elektrode am Beginn der Driftstrecke für eine kurze Zeit geöffnet, so dass eine Probe unterschiedlicher Ionenspezies zu dem Ionenkollektor driften kann. Die Länge der Öffnungszeit muss gut zwischen sich widersprechenden Vorgaben optimiert ausgewählt werden. Sie muss zunächst kurz sein, um die Peak-Breite des resultierenden Driftspektrums zu minimieren. Andererseits muss sie so lang wie möglich sein, um es einer maximalen Anzahl von Ionen zu ermöglichen, in die Driftröhre einzutreten. Ein weiteres Problem ist mit den bisherigen Standard-Ausblendtechniken verbunden. Das Ionentor muss geschlossen bleiben, bis die letzte Ionenspezies den Ionenkollektor erreicht. Hierdurch verliert man laut der unten näher bezeichneten Literaturstelle Knorr et al.

[1] bis zu 99 % der Analyt-Moleküle, welche kontinuierlich aus der Analyseprobe desorbiert werden und durch den Probengasstrom durch eine Ionisationskammer transportiert werden. Bei klassischen Ionenmobilitätsspektrometern wird das Ionentor durch ein elektrisch leitfähiges Gitter am Beginn der Driftstrecke gebildet. Es gibt im Stand der Technik bereits verschiedene Ansätze, den bei solchen klassischen Ionenmobilitätsspektrometern durch die geringe Ionentor-Öffnungszeit auftretenden Ionenverlust zu

minimieren. Hierzu wird auf folgende Referenzen verwiesen, die Teil der hiesigen Offenbarung darstellen:

[1] F. J. Knorr et al. Fourier Transform Ion Mobility Spectrometry, Analyti- cal Chemistry, vol. 57, No. 2, pp. 402-406, Feb. 1985
[2] F. J. Knorr, Fourier Transform Time-of-Flight Mass Spectrometry, Ana- lytical Chemistry, vol. 58, No. 4, pp. 690-694, Apr. 986
[3] M. Misakian et al., Drift tubes for characterizing atmospheric ion mobility spectra using ac, ac-pulse, and pulse time-of-flight measurement techniques, Rev. Sei. Instrum., vol. 60, No. 4, pp. 720-729, Apr. 198
[4] B. K. Clowers, W. F. Siems, H. H. Hilland S. M. Massick, Hadamard Transform Ion Mobility Spectrometry, Anal. Chem. 2006, 78, 44-51
[5] R. A. Dyer and S. A. Dyer, Right-Cyclic Hadamard Coding Schemes and Fast Fourier Transforms for Use in Computing Spectrum Estimates in Hadamard-Transform Spectrometry
[6] Brian H Clowers et al.: "Pseudorandom sequence modifications for ion mobility orthogonal time-of-flight mass spectrometry", Analytical Chemistry, 1. April 2018 (2008-04-01), Seiten 2464-2473, XP055439202, United States, DOI: 10.1021/ac7022712

Aus den Referenzen [1], [2] sowie aus der US 4,707,602 A ist ein Verfahren und eine Vorrichtung zum Durchführen einer Fourier-Transformations- Ionenmobilitätsspektrometrie bekannt. Dabei wird der Gate-Elektrode ein bestimmtes Muster aufgeprägt, mit welchem Ionen durch die Gate-Elektrode durchgelassen werden. Dabei wird eine Spannung an der Gate-Elektrode und das Signal, welches den Ionenkollektor erreicht, gleichzeitig mit einer periodischen Modulationsfunktion (Gate-Funktion) moduliert. Z. B. könnte die Modulationsfunktion eine Sinus-Welle oder eine Rechteckwelle sein. Standardmäßig wird eine Rechteckswelle verwendet. Gleichzeitig wird das Ausgangsgate mit der gleichen Rechteckswelle ohne PhasenVerschiebung moduliert. Dadurch wird erreicht, dass nur Ionen mit einer Driftzeit, $1/v$, $2/v$... usw. den Kollektor erreichen wobei v die Frequenz darstellt).

Dann wird die Frequenz der Modulationsfunktion z. B. fortlaufend geändert, während ihre relative Form konstant bleibt. Die Breite des Frequenzänderungsbereiches bestimmt die Auflösung des transformierten Spektrums. Genauer wird die Auflösung des aus dem Interferogram rücktransformierten Driftzeitspektrums bestimmt durch:

(1) Abtastfrequenz
(2) Gemessene 'Fourierfrequenzen'. Im Idealfall sollten alle FourierFrequenzen (Nyquist = Nyquist Abtastfrequenz) durchgemessen werden. Das ist meist jedoch nicht möglich. Speziell die niederen (z.B. 0-frequenz) sind schwierig.

(3) Für jede Frequenz müssen eine ausreichende Anzahl von Perioden vermessen werden (was die Messdauer erhöht; hier muss eventuell ein Kompromiss gefunden werden). Auch das bestimmt die erzielte Auflösung mit.

Dann wird ein Ausgangsignal als eine Funktion der angewandten Modulationsfrequenz erzeugt. Dieses Ausgangssignal wird als Ioneninterferogramm bezeichnet. Anschließend wird die Fouriertransformation dieses Interferogramms berechnet, aus der sich das Driftzeitspektrum ableiten lässt.

Auf diese Art und Weise kann man praktisch die Zeit kodieren. Die Gate-Elektrode und simultan und phasengleich die Ausgangselektrode werden zu einer bestimmten Frequenz bis zur Hälfte der Zeit offen gehalten, so dass Ionen hindurch können. Dabei wird der zu dieser Frequenz passende Ionenstrom ermittelt. Die zu einer anderen Frequenz hindurch gelangenden Ionen werden durch diese andere Frequenz gekennzeichnet. Transformiert man dann das so aufgezeichnete Frequenzspektrum durch Fouriertransformation wieder in die Zeit-Domäne, hat man eine Auflösung der entsprechenden Laufzeiten.

Ein ähnliches Verfahren funktioniert auch mit anderen Kodierungsmethoden. Beispielsweise kann man auch die Gate-Elektrode mit einem Hardamard-Code modulieren, wie dies z. B. näher in den Referenzen [4], [5] und [6] beschrieben ist. Entsprechende Verfahren werden Hadamard-Transformations- Ionenmobilitätsspektrometrieverfahren genannt.

Weitere Ionenmobilitätsspektrometer und damit durchführbare Verfahren sind aus der EP 0 848 253 B1 , der DE 198 61 106 B4, der DE 10 2007 057 374 A1 , der DE 102 47 272 A1 sowie der DE 198 15 436 B4 und der DE 103 06 900 A1 bekannt. Es wird für nähere Einzelheiten zu den unterschiedlichen Techniken der Ionenmobilitätsspektrometrie auf die vorerwähnten Druckschriften verwiesen.

Die DE 103 06 900 A1, die DE 102 47 272 A1 sowie die DE 10 2007 057 374 A1 betreffen Ionisationsverfahren und Ionisationsvorrichtungen zur Verwendung in der Ionenmobilitätsspektrometrie zum Ionisieren des zu untersuchenden Analyts, wobei die Ionisation durch Pulse einer Ionisationsstrahlung erfolgt. Hierzu wird bei diesen bekannten Ionisationsverfahren ein gepulster Laser als Ionisationsstrahlungsquelle verwendet. Genauer beschreibt die DE 103 06 900 A1 ein Spektrometer mit Laseranordnung zur Gasanalyse. Dabei umfasst das Spektrometer eine Kammer zur Aufnahme eines Gases, eine Einrichtung zur Erzeugung eines Potentialgefälles in der Kammer, eine Laserlichtquelle sowie einen optischen Resonator, der durch gegenüberliegende Spiegel gebildet ist oder als Ringresonator ausgebildet ist. Innerhalb der Kam- mer wird ein Laserstrahl zur Ionisierung des Gases erzeugt. Ein Ionenkollektor dient zur Detektion der erzeugten Ionen.

Eine ähnliche Vorrichtung wird in der DE 102 47 272 A1 beschrieben, wobei an Stelle eines durch gegenüber liegende Spiegel aufgebauten optischen Resonators eine Multireflektionszelle vorgesehen ist.

In dem Verfahren gemäß der DE 10 2007 057 374 A1 wird neben einem solchen Laser-Ionisationmobilitätsspektrometrie-Verfahren unter Verwendung eines Laser-Ionisationsverfahren noch ein Absorbtionsspektrometrieverfahren sowie eine Fluoreszenzmessung durchgeführt.

US 6 300 626 B1 offenbart, das ein Ionenstrahl derart moduliert wird, dass ein möglichst konstanter Ionenfluss in einem Zeitintervall gegeben ist.

Bei solchen Laser-Ionisationsmobilitätsspektrometrie-Verfahren (im Folgenden kurz auch LIMS-Verfahren) ist eine Gate-Elektrode entbehrlich. Einzelne Laserpulse erzeugen die Ionenspezies (direkt oder durch nachfolgende chemische Ionisation). Bei allen bekannt LIMS-Verfahren muss allerdings der Laserpulsabstand wenigstens so groß wie die Driftzeit der langsamsten Ionenspezies sein. Dies begrenzt die Menge der Analytmoleküle.

In der konventionellen Ionen-Mobilitäts-Spektrometrie beträgt der zeitliche Rahmen zwischen zwei Ionisationsvorgängen zwischen 20 und 40 ms. Speziell dann, wenn kürzere Messzeiten gefordert werden, wie z. B. bei einem thermisch induzierten Desorptions-Vorgang, sind diese Zeiten oft zu lang, und ein Grossteil des zur Verfügung stehenden Gasgemisches kann für die Messung nicht verwendet werden.

Die bisher bekannten IMS-Geräte haben daher die Nachteile einer niedrigen Repetitionsrate und einer begrenzten Nachweisempfindlichkeit.

Aufgabe der Erfindung ist es, ein Ionisationsverfahren sowie eine Ionenerzeugungsvorrichtung zur Verfügung zu stellen, mit denen eine höhere Sensibilität und größere Messgeschwindigkeit in Ionenmobilitätsspektrometern bei gleichzeitig einfachem Aufbau erhalten werden kann.

Diese Aufgabe wird durch ein Ionisationsverfahren gemäß Anspruch 1 sowie eine Ionenerzeugungsvorrichtung gemäß Anspruch 11 gelöst.

Vorteilhafte Ausgestaltungen der Erfindung sind Gegenstand der Unteransprüche.

Vorteilhafte Verwendungen sind Gegenstand der weiteren Nebenansprüche.

Gemäß einem ersten Aspekt schafft die Erfindung ein Ionisationsverfahren zum Ionisieren eines mittels Ionenmobilitätsspektrometrie zu untersuchenden Analyts durch Pulse einer Ionisationsstrahlung, wobei eine Pulsfolge mit einem vorbekannten zeitlich variablen quasi-zufälligen Aufprägungsmuster oder mit einem vorbekannten zeitlich variablen Aufprägungsmuster moduliert wird, wobei das zeitlich variable Aufprägungsmuster mit sich fortlaufend verändernder Frequenz zur Fourier-Codierung ausgebildet ist und bei Verwendung des vorbekannten zeitlich variablen Aufprägungsmusters Signale im Frequenzbereich durch Einsatz von periodisch erzeugten Pulsen und wenigstens einem sich entsprechend öffnenden Empfangsgate gemessen werden.

Die Modulation und Demodulation wird besonders einfach, wenn, wie bei einer vorteilhaften Ausgestaltung vorgesehen, die ionisierende Pulsfolge binär moduliert wird.

Als vorteilhafte Aufprägungsmuster kommen insbesondere diejenigen Muster in Betracht, wie sie bereits bei bekannten Gate-Spannungsmodulationsverfahren bei der Ionenmobilitätsspektrometrie eingesetzt worden sind. Vorteilhaft werden insbesondere die Hardamard-Codierung oder die Fouriertransformation-Codierung verwendet.

Demgemäß ist bei einer Ausgestaltung der Erfindung vorgesehen, dass eine Pulsfolge in äquidistanten zeitlichen Intervallen mit einer Intervallfrequenz moduliert wird, wobei jedes Intervall entweder eine EIN-Phase, in der wenigstens ein Puls erzeugt wird, oder eine AUS-Phase, in der keine Pulse erzeugt werden, darstellt, wobei die Folge von EIN-Phasen und AUS-Phasen nach einem vorbekannten quasi-zufälligen Muster, insbesondere einem Hadamard-Muster, erzeugt wird.

Besonders bevorzugt wird eine Folge von EIN-Phasen und AUS-Phasen nach einem quasi-zufälligen Muster, insbesondere einem Hadamard-Muster erzeugt. Gemäß einer möglichen Ausführungsform wird innerhalb der EIN-Phasen eine Pulsfolge mit einer Pulsfrequenz kleiner als die Intervallfrequenz erzeugt. Die Intervallfrequenz kann beispielsweise ein ganzzahliges Vielfaches der Pulsfrequenz sein. Gemäß einer mehr bevorzugten Ausgestaltung, die sich als besonders vorteilhaft für genaue Messungen erwiesen hat, wird in jeder EIN-Phase genau ein Puls erzeugt. Mehr vorzugsweise wird der Puls jeweils zu Beginn der EIN-Phase erzeugt.

Bei einer anderen vorteilhaften Ausgestaltung ist bevorzugt, dass eine Folge von Intervallen mit einer Intervallfrequenz generiert wird, wobei in der Folge von Intervallen EIN-Phasen, in denen wenigstens ein Puls oder eine Pulsfolge erzeugt wird, und AUS-Phasen, in denen keine Pulse erzeugt werden, miteinander abwechseln, wobei die Intervallfrequenz zum Erhalt eines Frequenzspektrums verändert wird.

Besonders bevorzugt wird ein gepulster Laser zum Erzeugen der Ionisatiospulse verwendet.

Gemäß einer bevorzugten Ausgestaltung können Pseudozufallsmuster, sowie jede Art von nicht repetitiven Mustern zur Aufprägung von sehr hoch repetitiven Ionisationsmustern verwendet werden. Auch ist eine Fourier-Codierung als Muster zur Aufprägung möglich. Bei dieser Ausgestaltung, die auch als LIMS-FT bezeichnet werden kann, werden vorzugsweise Signale im Frequenzbereich gemessen durch Einsatz von periodisch erzeugten Pulsen und wenigstens einem sich entsprechend öffnenden Empfangs-Gate. Die im Frequenzbereich gemessenen Signale werden durch FT (Fouriertransformation) in den Drift-Zeitbereich (rück-)transformiert. Hierzu kann eine FFT (Fast Fourier Transformation), also ein etabliertes und leicht durch Standardsoftware implementierbares Rechenverfahren zum Berechnen einer FT eingesetzt werden.

In einer bevorzugten Ausführungsform wird zur Ionisation ein Lasersystem verwendet, welches Repetitionsraten von ca. 1 kHz bis in den unteren MHz-Bereich ermöglicht.

Die erfindungsgemäße Modulierung der Pulse einer Ionisationsstrahlung mit dem Aufprägungsmuster, und insbesondere der Einsatz von Lasersystemen sowie anderen Photonen-Basierenden-Ionisationsverfahren, bietet gegenüber herkömmlichen Ionentorsystemen den Vorteil, zeitlich korrekt, und ohne zeitliche Einschränkungen einen Ionenstrom mit sehr hohen Raten zu modulieren.

Durch die Aufprägung eines zeitlich variablen bekannten Musters mit hoher Repetitionsrate lässt sich die Ausbeute eines zur Verfügung stehenden Analyt-Gases wesentlich verbessern. Zwischen der Repetitionsrate und der Ionenausbeute besteht ein nahezu linearer Zusammenhang. Durch den Einsatz hochrepetitiver Ionisationspulsquellen mit entsprechend aufgeprägtem Muster wird ein wesentlich höheres Ionensignal im betrachteten Zeitraum als mit allen bisher bekannten Ionenmobilitätsspektrometrie-Verfahren erreicht. Es kann somit vorteilhaft eine höhere Nachweisempfindlichkeit des IMS-Verfahrens gewährleistet werden und/oder eine Ionisationsquelle (insbesondere Laser) zum Einsatz kommen, die eine wesentlich geringere Ausgangsleistung zur Verfügung stellen muss. Speziell bei einer sogenannten Laser-IMS (LIMS) trägt eine niedrigere Ausgangsleistung zu einem wesentlich besseren Kosten-Nutzen-Aspekt bei verbesserter Leistung bei.

Insbesondere lassen sich damit mit Batterien oder Akkus versorgte mobile IMS-Geräte mit hoher Nachweisempfindlichkeit herstellen.

Mit der hier vorgestellten Verfahrensweise gemäß den bevorzugten Ausgestaltungen der Erfindung wird ein Verfahren zur Verfügung gestellt, bei denen Ionen, die aus einer laserinduzierten Zwei-Photonen-Ionisation stammen, effizienter als in Standard-LIMS-Konstruktionen eingesetzt werden können und für eine sensitive Messung des Mobilitätsspektrum verwendet werden können.

Ausführungsbeispiele Erfindung werden nachfolgend anhand der beigefügten Zeichnungen näher erläutert. Darin zeigt:

Fig. 1      eine schematische vereinfachte Darstellung einer Aufrührungsform eines Laserionenmobilitätsspektrometers mit einer Ionenerzeugungsvorrichtung, die eine gepulste Ionisationsstrahlungsquelle und eine Codierungs- oder Modulationseinrichtung zur Codierung und/oder Modulation einer Pulsfolge der Ionisationsstrahlungsquelle mit einem vorbekannten zeitlich variablen Aufprägungsmuster aufweist;

Fig. 2    ein schematisches Diagramm zur Darstellung eines ersten Ausführungsbeispieles einer mit dem Aufprägungsmuster modulierten Laserpulsfolge (Hadamard-Muster);

Fig. 3    ein schematische Diagramm zur Darstellung eines zweiten Ausführungsbeispiel einer mit dem Aufprägungsmuster modulierten Laserpulsfolge, die eine derzeit bevorzugten Ausführungsform für eine Hadamard-codierte Laserpulsfolge darstellt;

Fig. 4, 4a, 4b    eine schematische Darstellung eines dritten Ausführungsbeispiels einer mit einem anderen Aufprägungsmuster modulierten Laserpulsfolge, wobei zu Darstellungszwecken in der Teilfigur Fig. 4a eine äquidistante Einzelfrequenztaktfunktion mit einer Autokorrelationsfunktion in der Teilfigur Fig. 4b dargestellt ist (FFT-Muster);

Fig. 5    eine schematische Darstellung eines Ioneninterferrogramms als Ergebnis der bei der in Fig. 4a und 4b angedeuteten FFT-Codierung;

Fig. 6    eine schematische Darstellung eines Frequenzdurchlaufs bei der FFT-Codierung; und

Fig. 7    eine schematische Darstellung einer Fouriertransformation an dem Ioneninterferrogramm zum Erhalt des Spektrum in der Zeitdomain.

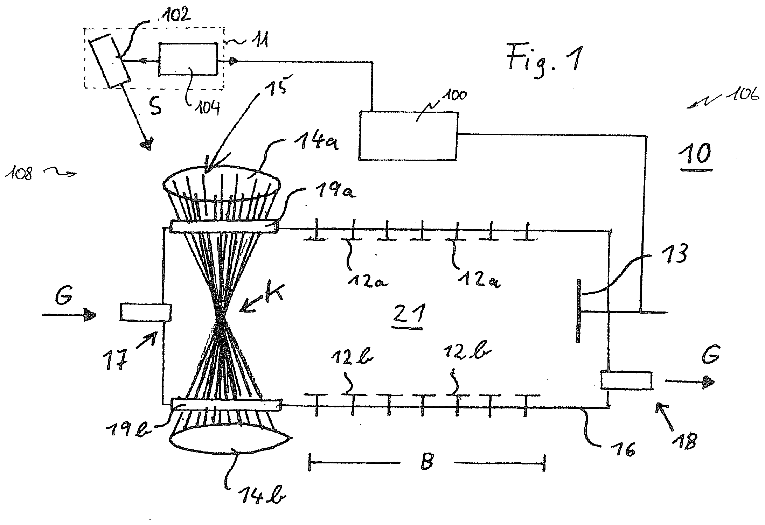

Fig. 1 zeigt ein Spektrometer 10 als besonders bevorzugte Ausführungsform der Erfindung. Dabei dient ein Laser 11 zur Erzeugung eines Laserstrahls S im UV-Bereich, der im Betrieb mit einem zu analysierenden Gas G in dem Spektrometer 10 in Wechselwirkung tritt, um darin enthaltene Stoffe (Analyte) zu ionisieren. Eine Anordnung von einer Vielzahl sich gegenüber liegender Reihen von Elektroden 12a, 12b bilden zusammen mit einer in der Figur nicht dargestellten Spannungsquelle eine Einrichtung zur Erzeugung eines Potentialgefälles. Durch das Potentialgefälle werden die in das Potentialgefälle eintretenden Ionen beschleunigt. Die entsprechend eintretenden Ionen durchlaufen eine Bescheunigungsstrecke B, die durch die gegenüberliegenden Reihen von Elektroden 12a, 12b gebildet ist. An dem Ende der Beschleunigungsstrecke B ist ein Ionenkollektor 13 angeordnet, der zur Detektion der erzeugten Ionen dient. Der Ionenkollektor 13 ist beispielsweise als separate Elektrode ausgestaltet und elektrisch mit einer Detektions- und/oder Analyseeinrichtung 100 verbunden.

An dem oder vor dem Beginn der Beschleunigungstrecke B sind zwei sich gegenüberliegende Spiegel 14a, 14b angeordnet, um den Laserstrahl S vielfach zwischen den Spiegeln 14a, 14b hin und her zu reflektieren. Der durch eine Öffnung eintretende Laserstrahl S durchläuft somit eine Vielzahl von Weglängen zwischen den Spiegeln 14a, 14b, so dass die in dem Gas zurückgelegte Wegstrecke des Laserstrahls S um ein Vielfaches erhöht wird und dadurch eine effektivere Wechselwirkung des Laserstrahls S mit dem Gas G erzielt wird. Die Spiegel 14a, 14b sind dabei optisch so gestaltet, dass auf den Oberflächen, jeweils eine Vielzahl von Reflektionspunkten 15 der hin und her reflektierten Laserstrahlen entstehen, die auf einer geschlossenen Bahn bzw. Kreisbahn oder Ellipse liegen. Es ist aber auch möglich, dass die Reflektionspunkte 15 auf einer Geraden liegen. Die durch die Reflektionen gebildeten einzelnen Teilstrahlen zwischen jeweils zwei gegenüberliegenden Reflektionspunkten 15 sind zu den Spiegeln 14a, 14b hin aufgefächert und konzentrieren sich in einem Konzentrationsbereich K, der zwischen den beiden gegenüberliegenden Spiegeln 14a, 14b liegt.

Das Spektrometer 10 hat weiterhin ein Gehäuse 16 mit Öffnungen als Gaseinlass 17 und Gasauslass 18. In dem Bereich der Spiegel 14a, 14b hat das Gehäuse 16 jeweils eine Öffnung, die mit einem Fenster 19a, 19b versehen ist bzw. verschlossen ist. Somit bildet das Gehäuse 16 mit den Fenstern 19a, 19b einen abgeschlossenen Innenraum 21. Im Betrieb wird das zu analysierende Gas G mittels einer angeschlossenen Gaszuleitung durch den Gaseinlass 17 dem Innenraum 21 zugeführt, und es tritt an dem gegenüberliegenden Ende des Gehäuses 16 durch den dort angeordneten Gasauslass 18 wieder aus.

In dem Betrieb werden die Moleküle in dem zugeführten Gasstrom auf einer Vielzahl von Wegstrecken des Laserstrahls S ionisiert und durchlaufen anschießend das Potentialgefälle, das durch die Elektroden 12a, 12b zwischen der durch die Laser 11 und die Reflektionseinheit gebildeten Ionenerzeugungsvorrichtung und dem Ionenkollektor 13 gebildet wird. An den Elektroden 12a, 12b liegt ein Potentialgefälle von einigen 100V/cm bis zu über 10.000 V/cm an. Durch das Potentialgefälle werden die zwischen den Spiegeln 14a, 14b erzeugten Ionen beschleunigt und treffen an dem Ende der Beschleunigungsstrecke B auf den Ionenkollektor 13.

Als Laser 11 dient z. B. ein miniaturisierter, diodengepumpter Festkörperlaser, der abstimmbar ist und eine Leistung von einigen $\mu$J bis in den Bereich oberhalb von 100$\mu$J im UV-Bereich aufweist. Die einzelnen Laserpulse haben z. B. eine Pulsbreite kleiner als ca. 5 Nanosekunden. Der Laser hat eine Pulsrepetitionsrate von ca. 1 kHz bis in den unteren MHz-Bereich.

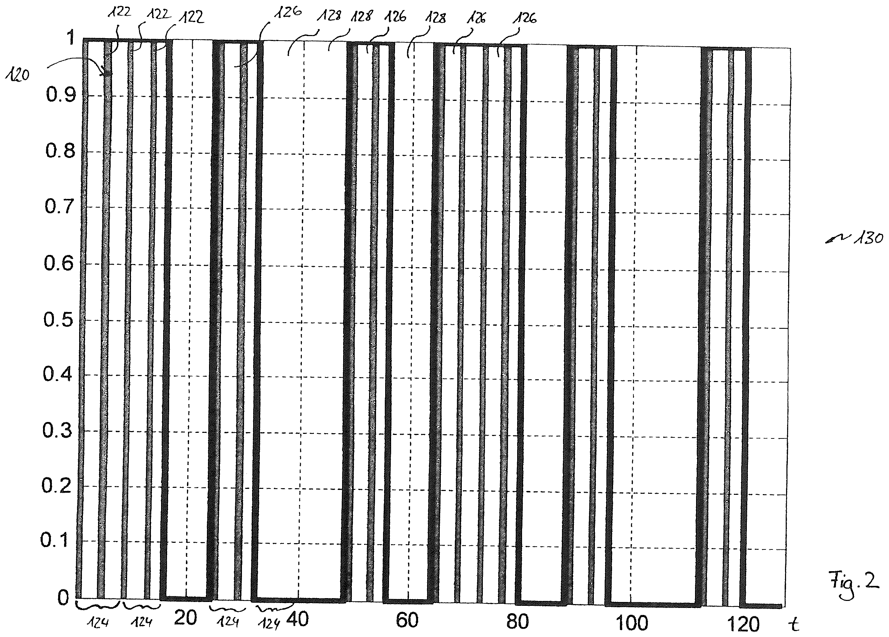

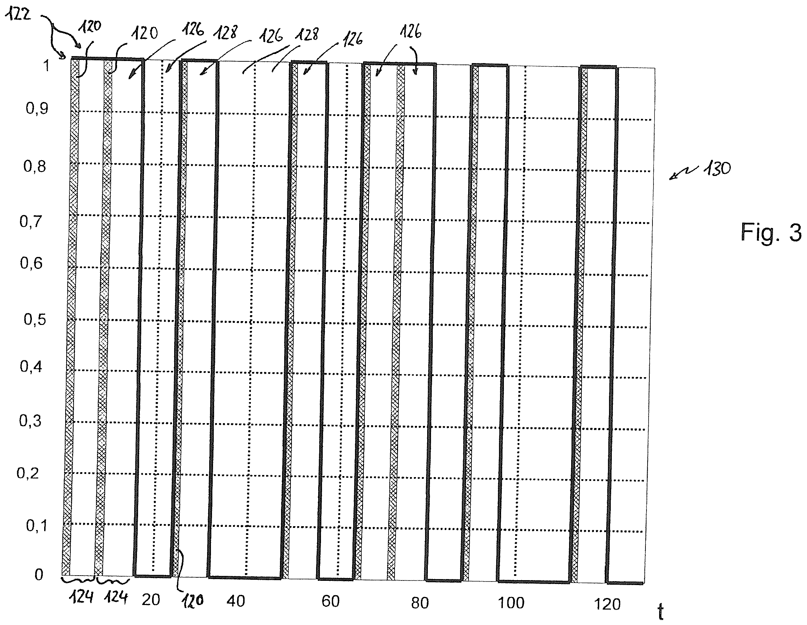

Der Laser 11 weist als eigentliche Laserstrahlquelle eine Laservorrichtung 102, die eine Erzeugung willkürlicher Laserpulsfolgen mit einem direktem Triggern einzelner Pulse erlaubt, sowie eine Codierungs- oder Modulationseinrichtung 104 auf, mittels der eine durch die Laservorrichtung 102 erzeugte Laserpulsfolge 120 (wie in Fig. 2 oder Fig. 3 dargestellt) mit einem vorbestimmten Aufprägungsmuster kodiert oder moduliert wird.

Die Detektions- und/oder Analyseeinrichtung 100 ist mit der Codierungs- und/oder Modulationseinrichtung 104 verbunden und nutzt das gleiche Aufprägungsmuster zum Dekodieren bzw. Demodulieren des an dem Ionenkollektor 13 erhaltenen Ionenstroms.

Wie bei bekannten LIMS-Verfahren und -Vorrichtungen werden die den Ionenkollektor 13 erreichenden Ionen durch Mobilität und Intensität getrennt und erzeugen an dem Ionenkollektor 13 einen Ionenstrom, der verstärkt, digitalisiert und aufgenommen wird. Während aber bei bekannten LIMS-Konstruktionen jede Aufzeichnung zwischen zwei Gate-Elektrodenöffnungen ein gesamtes Driftspektrum darstellen, wird bei der hier vorgestellten Konstruktion und Verfahrensweise eine Vielzahl von Laserpulsen 122 mit aufgeprägtem Muster zur Erzeugung des Driftspektrums (wie z.B. in Fig. 2 oder 3 dargestellt) herangezogen.

Im Folgenden wird ein Verfahren zum Messen der Mobilitätsspektren von Ionen beschrieben, die durch den modulierten schnellgepulsten Laser 11 erzeugt werden. Dieses Verfahren ist mittels des in Fig. 1 insgesamt gezeigten Laserionisationsmobilitätsspektrometrievorrichtung 106 durchführbar.

Das Verfahren weist einen Schritt des Modulierens des Ionenstroms auf, der von einer laserinduzierten Zwei-Photonen-Ionisationsquelle 108 (mit dem Laser 11 mit hoher Repetitionsrate) stammt und der verschiedene Ionentypen mit verschiedenen Mobilitäten umfasst. Weiter umfasst das Verfahren eine zeitliche Schaltsignatur mit einem Ionendurchlass von näherungsweise 50 %, wodurch die Modulation oder Signatur für die verschiedenen Ionentypen zueinander in unterschiedlicher Weise während der Betriebszeit aufgrund der unterschiedlichen Geschwindigkeiten verschoben werden.

Aus dem empfangenen quasikontinuierlichen Ionenstromsignal an dem Ende der durch das Gehäuse 16 gebildeten Driftröhre der Laserionisationsmobilitätsspektrometrievorrichtung 106 kann die Zusammensetzung der Ionentypen gemäß Mobilität und Intensität durch Dekodieren der Schaltsignatur (d. h. z. B. der Modulation oder Kodierung) wieder aufgedeckt werden.

Gleichzeitig kann eine Auflösungsverbesserung durch einen zweiten Entfaltungsschritt oder Dekonvolutionsschritt des Diffusionsprofils erreicht werden.

Dieses Verfahren hat einen Zyklus mit sehr langer Betriebszeit für die durchgelassene Substanz und für die Ionen des Ionenstroms.

Bei der bevorzugten Ausgestaltung wird der Drift der Ionen eine schnelle zeitliche Codierung aufgeprägt, indem eine binäre Modulation der ionisierenden Laserpulsfrequenz, die mit hohen konstanten Repetitionsraten läuft, verwendet wird.

Der Laser 11 wirkt hierbei sowohl als Ionisationsquelle als auch als Modulationseinrichtung (oder Codierungseinrichtung) was ein Ionengitter oder ein Ionentor am Beginn der Driftkammer entbehrlich oder redundant macht.

Das Kodieren (Modulieren, Schalten) wird direkt auf den Ionenerzeugungsmechanismus - Ionisationsquelle 108 - angewandt, und beeinflusst deswegen jeden Ionentyp in der gleichen Weise. Mit anderen Worten hängt die Kodierung nicht - wie bei allen zuvor bekannten Ionentor-basierten modulierten Ionenmobilitätsspektroumetrieverfahren - von den elektrischen Eigenschaften der Ionenspezies ab.

Die Kodierung ist vorzugsweise im Wesentlichen binär und wird durch Modulieren der schnellen Laserpulssequenz in zeitlichen Intervallen erreicht.

Es wird eine Laservorrichtung 102 verwendet, die eine Erzeugung willkürlicher Laserpulssequenzen mit einer direkten Triggerung individueller Pulse erlaubt. Es gibt keine Laseremission zwischen den Pulsen.

Die Kodiermuster der unterschiedlichen Ionentypen sind relativ zueinander wegen der unterschiedlichen Driftgeschwindigkeiten während der Drift der Ionen durch die Driftröhre des Mobilitätsspektrometer 10 verschoben, so dass an dem Ionendetektor ein komplex aussehendes Signalmuster des Ionenstroms anliegt.

Anstelle des in Fig. 1 gezeigten LIMS-Aufbaus kann auch ein anderer LIMS-Aufbau, beispielsweise wie in eingangs zum LIMS-Verfahren zitierten Druckschriften beschrieben, entsprechend mit der Codierungs- und/oder Modulationseinrichtung 104 zur Modulierung mit entsprechenden Aufprägungsmustern versehen werden.

Im Folgenden werden unter Bezug auf die Figuren 2 bis 7 unterschiedliche mögliche Aufprägungsmuster zum Modulieren der Laserpulsfolge erläutert.

Die Figuren 2 und 3 zeigen dabei Beispiele einer Hadamard-Codierung. Die Kodierung ist im Wesentlichen binär. Es erfolgt strikt eine Schaltung "ein" oder "aus".

Bei dem Beispiel von Fig. 2 wird die Kodierung erhalten durch Modulieren einer schnellen Laserpulsfolge mit schnell aufeinander folgenden Laserpulsen 122 bei äquidistanten zeitlichen Intervallen 124. Ein Intervall 124 kann dabei als EIN-Phase (Laserpulse 122 werden erzeugt) oder als AUS-Phase 128 (Laserpulse werden nicht erzeugt; Pause) geschaltet werden. Die zeitliche Abfolge der Intervalle 124 in Form von Ein-Phasen 126 und Aus-Phasen 128 sind in einem charakteristischen quasi-zufälligen Muster angeordnet.

Bei dem Beispiel von Fig. 3, das die derzeit bevorzugte Ausgestaltung darstellt, erfolgt die Aufprägung des Hadamard-Musters auf die Laserpulsfolge derart, dass pro EIN-Phase 126 genau ein Laserpuls 122 erzeugt wird. Bei dem dargestellten Beispiel wird der Laserpuls am Beginn jeder EIN-Phase 126 erzeugt. Ansonsten entspricht das Beispiel von Fig. 3 demjenigen von Fig. 2.

In den Figur 2 und 3 ist ein "Hadamard-Muster" 130 als Aufprägungsmuster eingesetzt, wie es auch bereits in anderen Gebieten der Spektroskopie oft verwendet wird. Es können aber auch andere quasi-zufällige Muster eingesetzt werden.

Das in den Figuren 2 und 3 dargestellte Hadamard-Muster folgt der einfachen Hadamardfolge: 1 1 0 1 0 0 1 0 1 1 ....

Die Intervallfrequenz liegt bei dem in Figur 2 dargestelltem Beispiel bei der Hälfte der Laserpulsfrequenz. Ein Verhältnis von Laserpulsfrequenz zu Intervallfrequenz von bis zu 5 ist praktikabel (z.B. 50 kHz-Frequenz für die Kodierung und 250 kHz-Frequenz für die Laserpulse).

Zum Beispiel beginnen bei Ausführungsformen des Verfahrens und der zum Durchführen desselben ausgebildeten Vorrichtung die Laserpulsfrequenz bzw. die Intervallfrequenz bei einigen kHz und reichen bis in den MHz-Bereich hinein.

Jede EIN-Phase (die Einsen in der Hadamard-Simplex-Quasi-Zufalls-Folge) beinhaltet bei dem in Figur 2 dargestellten Beispiel der doppelten Frequenz zwei Laserpulse.

Allgemein sollte die Intervallfrequenz kleiner als die Abtastfrequenz sein. In einem Prototyp ist mit 50 kHz Abtastfrequenz gearbeitet worden, wobei eine Hadamard-Frequenz von maximal 25 kHz erreichbar gewesen ist. Es hat sich bei Versuchen herausgestellt, dass idealerweise die Hadamard-Frequenz gleich der Laserpulsfrequenz gleich der Intervallfrequenz gewählt werden sollte. Ein solches Beispiel ist in Fig. 3 dargestellt. Damit lässt sich insbesondere die Rücktransformation einfach durchführen. Bei dem in Fig. 2 dargestellten Beispiel mit mehreren Laserpulsen 120 pro EIN-Phase ist die Ionenausbeute größer, dafür ist die Rücktransformation komplizierter.

In Fig. 3 ist somit ein Schema gezeigt, bei dem jede EIN-Phase 126 nur einen Puls überdeckt. Dies ist einfacher praktikabel und daher zurzeit bevorzugt.

Bei den aus der eingangs erwähnten Literatur bekannten Ionenmobilitätsspektrometern mit Gates am Eingang und Ausgang der Driftstrecke werden z.B. binäre Kodes derart eingesetzt, dass 50% der Zeit der Durchlass offen gelassen wird. Die Ionen werden ständig, z.B. durch radioaktive Strahlung erzeugt. Es sind zwei Gates notwendig. Sind diese Gates 50 % der Zeit offen, lassen sie etwa 50% aller Ionen im statistischen Mittel durch, was gegenüber den 1 bis 5% bei klassischen IMS-Technologien (ohne Codierung der Gatezeiten) eine Erhöhung um den Faktor 10 bedeutet.

Bei bisher bekannten Laser-IMS wird klassisch z.B. alle 50ms ein Ionenpaket erzeugt, dann wird gewartet, bis die letzten Ionen am Kollektor angelangt sind (nach 50 ms) und dann wird wieder gepulst, um das nächste Ionenpaket zu erzeugen.

Wenn allerdings ein Code, beispielsweise eine Hadamard-Sequenz, von 1024 Bins, in diesen 50 ms aufkodiert wird, werden 512-mal mehr Ionen erzeugt. Mit einem solchen Verfahren lässt sich somit gegenüber bekannten LIMS-Verfahren eine theoretische Verbesserung um den Faktor 512 erreichen.

Bei dem erwähnten praktischen Beispiel sind derzeit z.B. Hadamard-Frequenzen von 0.5 mal der Abtastfrequenz, also z.B. 25kHz, einsetzbar; das heißt, in einem 50 ms Intervall wären das 1250 Bins. Wenn davon 50% als EIN-Phase geschaltet sind, ergeben sich 625-mal mehr Ionen als bei bisherigen Verfahren.

Für nähere Einzelheiten zu der Hadamard-Codierung wird ausdrücklich auf die Referenzen [4] und [5] verwiesen.

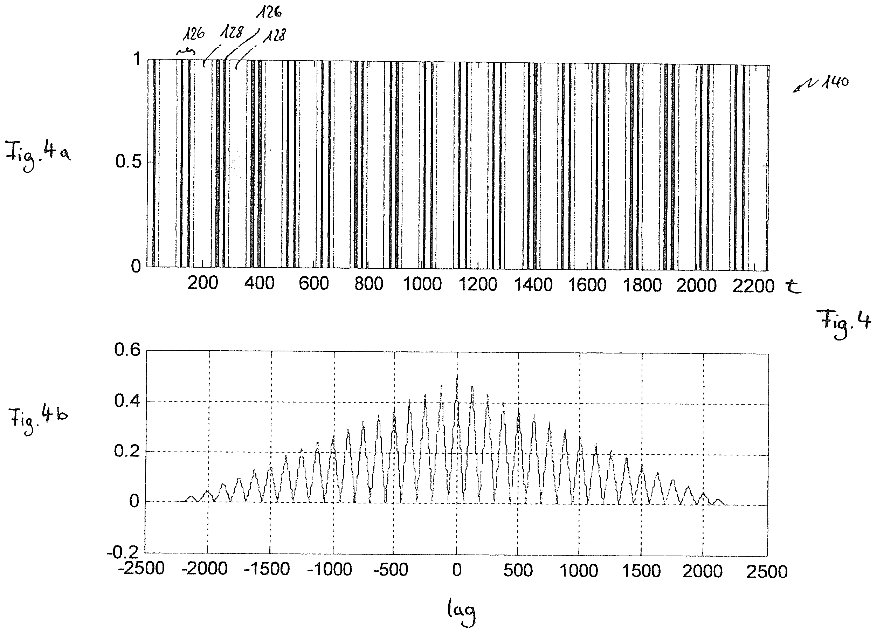

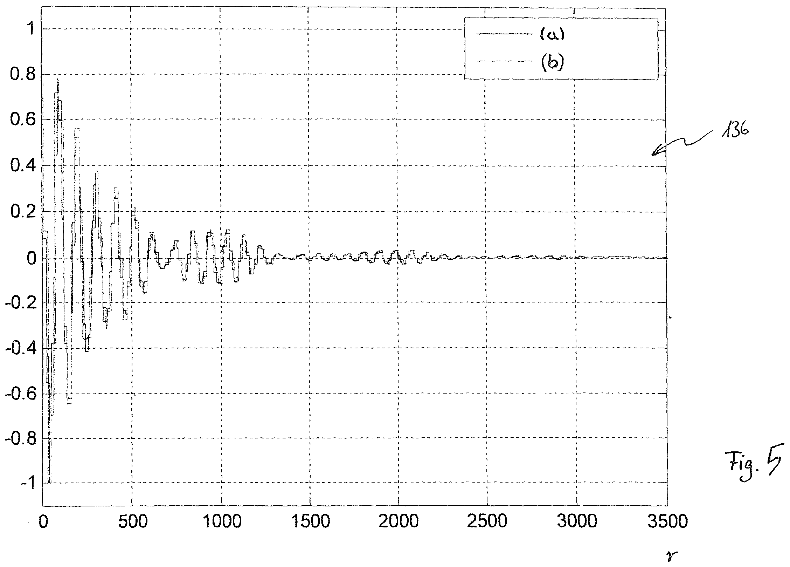

Im Folgenden wird anhand der Fig. 4, mit den Teilfiguren 4a, 4b, und der Fig. 5 bis 7 noch ein Beispiel einer FFT-Kodierung näher erläutert.

Dabei sind die zeitlichen Intervalle bezüglich der EIN-Phasen und AUS-Phasen in periodischer Weise äquidistant und entsprechen den Frequenzen einer diskreten Fouriertransformation.

Figur 4a stellt die äquidistante Einzelfrequenz-Durchlassfunktion (Gate-Funktion) dar, wobei die entsprechende Autokorrelation, wie sie bei dem FFT-LIMS-Modus eingesetzt wird, in Figur 4a dargestellt ist. Bei dem hier dargestellten Verfahren wird die Durchlassfunktion nicht an Gates oder Ionentoren, sondern durch Steuern der Laserpulse und durch elektronisches Steuern des Ionenkollektors 13 (EIN oder AUS) verwirklicht.

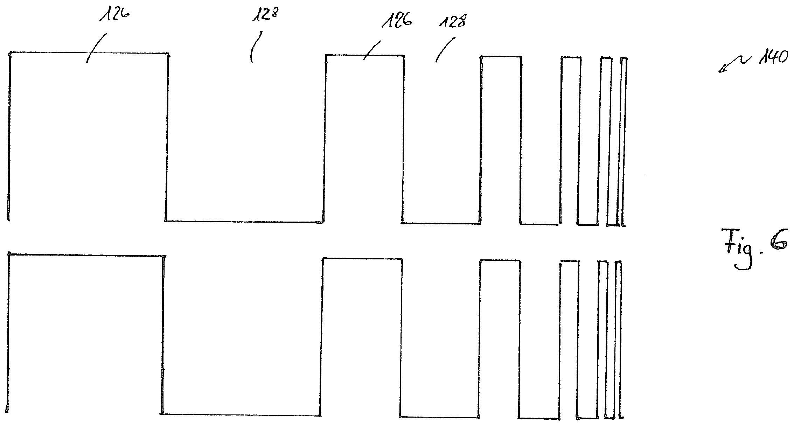

Bei einer möglichen Ausgestaltung, wie sie in Figur 6 schematisch angedeutet ist, werden bei einem Frequenzdurchlauf alle benötigten äquidistanten Fouriertransformationsfrequenzen auf den Ionenstrom moduliert. Der komplette Satz von Frequenzen führt zu einer Messung.

Figur 5 stellt ein Beispiel für ein Interferogramm dar, wie es mit Rechteckwellen und deren Autokorrelationsfunktionen, die in den Fig. 4a und 4b dargestellt sind, in dem FFT-LIMS-Modus erhalten wird.

Standardmäßig wird eine Rechteckswelle für die Aufprägung eingesetzt, wie sie zum Beispiel in der Fig. 4a dargestellt ist. Gleichzeitig wird das Ausgangsgate - d.h. bei dem Beispiel von Fig. 1 der Ionenkollektor 13 - mit der gleichen Rechteckswelle ohne Phasenverschiebung moduliert. Dadurch wird erreicht, dass nur Ionen mit einer Driftzeit, 1/v, 2/v... usw. den Ionenkollektor 13 erreichen, wobei v die Frequenz darstellt.

Mathematisch gesehen kann man dann das am Ionenkollektor 13 gemessene Signal als Integral (Summe) der Autokorrealtionsfunktion der Rechteckswelle multipliziert mit dem Driftzeitspektrum darstellen.

Die Rechteckswelle rw mit Laserpulsen 122 ist in Fig. 4a über die Zeit t aufgetragen dargestellt. Die Autokorrealtionsfunktion der Rechteckswelle ist in Fig. 4b dargestellt, wobei auf der x-Achse die entsprechende Zeitdifferenz lag angegeben ist.

Für das Signal S für eine Rechteckswellenfrequenz v gilt dann:

$$S(\nu) = \int u(t_d) \times a(t_d)\, dt_d$$

wobei

$u(t_d)$     das Driftzeitspektrum,
$t_d$     die Driftzeit und
a     die Autokorrelation der Rechteckswelle rw mit

$$a = \int (rw(t - t_d) \times rw(t))\, dt$$

(eine Dreieckswelle wie in Fig. 4b dargestellt)
ist.

Nach Messung aller Frequenzen erzielt man ein Interferogram, wie es bei (a) in Fig. 5 dargestellt ist, das der ebenfalls in Fig. 5 bei (b) dargestellten DCT (Diskrete Cosine Transform) des Driftzeitspektrums ähnlich ist. Unterschiede liegen bei der Verwendung von Dreieckswellen statt Sinuswellen als Vektorraumbasis und in anderen kleinen Abweichungen. Die Messungen in Figur 5 sind auf der Basis von diskreten Frequenzen simuliert. Hierzu wird ein fixes Raster von Fourierfrequenzen für eine bestimmte Zeit vermessen. Dabei ist in Fig. 5 auf der x-Achse die Frequenz v und auf der y-Achse das Signal aufgetragen. Die Kurve (a) stellt dabei das Interferogramm dar, das im Folgenden als Ioneninterferogramm bezeichnet wird. Die Kurve (b) stellt die Diskrete Kosinus-Transformation des Driftzeitspektrums dar. Wie erkennbar sind die Kurven sehr ähnlich, weswegen man aus der Kurve (a) durch die inverse diskrete Kosinus-Transformation unter Durchführung einiger Korrekturen das Driftzeitspektrum ermitteln kann.

Eine andere Möglichkeit zum Durchmessen unterschiedlicher Frequenzen ist in Fig. 6 dargestellt. Fig. 6 stellt einen sogenannten Sweep dar, bei der die Frequenz durchgestimmt wird. Die Messergebnisse weichen dann aber von den in Fig. 5 dargestellten Ergebnissen ab.

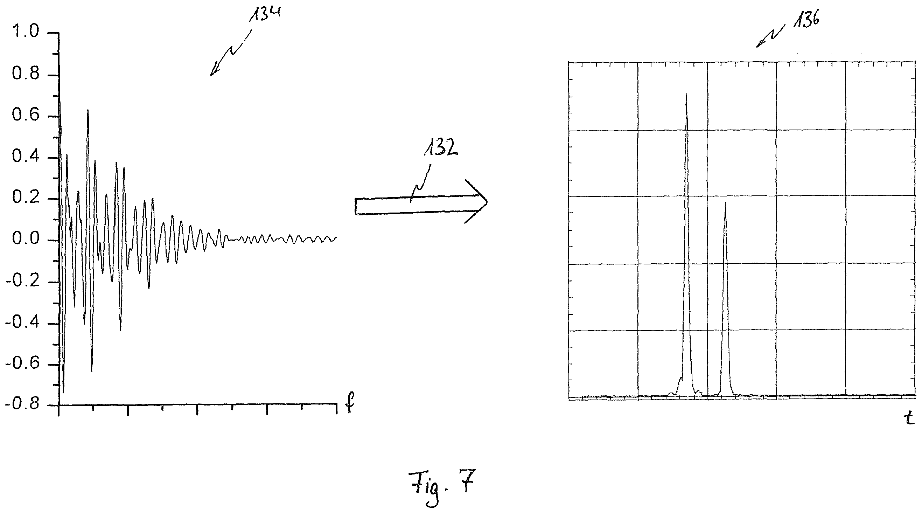

Wie in Figur 7 angedeutet, kann durch Fouriertransformation 132 des Ioneninterferogramms 134 das Ionenmobilitätsspektrum in der Zeitdomäne 136 ermittelt werden.

Entsprechende Aufprägungsmuster - also beispielsweise das Hadamard-Muster oder das in Figur 4a, 4b oder 6 gezeigte Fouriertransformationsmuster 140 wird durch die Codierungs- und/oder Modulationseinrichtung 104 der Laservorrichtung 102 aufgeprägt.

Der daraufhin erhaltene Ionenstrom wird mittels der Detektions- und/oder Analyseeinrichtung 100 gemessen und wieder hergestellt, wie dies im Folgenden näher erläutert wird.

Der physikalische Prozess und der sich ergebende gemessenen Ionenstrom kann durch eine mathematische Faltung des Kodierungsmusters mit dem Mobilitätsspektrum für FFT und Hadamard-Codierung beschrieben werden.

Eine weitere Faltung tritt mit dem Diffusionsprofil auf. Das Diffusionsprofil kann durch eine Gauß-Kurve angenähert werden; es wird während der Drift durch Diffusion der Ionen in der Vorwärts- und Rückwärtsrichtung erzeugt (spektrale Dekonvulotion oder Entfaltung).

In dem Beispiel der Hadamard-Codierung wird der Ionenstrom an dem Ionenkollektor des Driftabschnitts gemessen, digitalisiert und in seiner zeitlichen Abfolge gespeichert. Dieses gespeicherte Signalmuster kann dann durch mathematische Mittel dekodiert werden, z.B.

    a) durch Auflösen des linearen überbestimmten Satzes von Gleichungen, die das Mobilitätsspektrum der Ionen erhalten. Diese Methode funktioniert mit einem einzelnen Satz von überlagerten Spektren (Multiplex-Spektren), der durch einen pseudozufälligen Kode (Hadamard-Simplex) getriggert wird.
    b) durch Messen eines vollen Satzes von überlagerten Spektren, die mit Hadamard-Simplex-Reihenvektoren kodiert sind, und durch Wiedererhalt des Mobilitätsspektrums mit der inversen Hadamard-Matrix.

Im Beispiel der FFT-Kodierung wird der Ionenstrom an dem Ionenkollektor 13 an dem Ende des Driftabschnittes gemessen, digitalisiert und in seiner zeitlichen Abfolge gespeichert und für jede Frequenz des Frequenzdurchlaufes aufaddiert. Das daraus folgende Beispiel von einzelnen Messungen stellt die diskrete Kosinus-Transformation eines einzelnen Driftspektrums dar. Die Wiederherstellung kann durch Dekonvolution oder Entfaltung mit dem Aufbringungsmuster oder der inversen diskreten Kosinus-Transformation (DCT) durchgeführt werden, aus der dann das Driftzeitspektrum bestimmt werden kann. Eventuell sind zusätzlich einige kleinere Korrekturen nötig, wie dies auch in der Literaturstelle [1] näher ausgeführt ist.

Die Qualität der mathematischen Transformationen (Dekonvolutionen) zum Dekodieren ist stark von dem Rauschen des Signals abhängig. Zum Reduzieren des Rauschens des Signals können einzelne Messungen aufsummiert werden. Zum Ermöglichen des Aufsummierens sollte das Kodierungsmuster während eines Summierungsvorganges streng periodisch sein, und deswegen soll das Kodieren nicht verändert werden. Die Länge dieser Periode sollte wenigstens gleich der Driftzeit des langsamsten Ions in dem Spektrum sein.

Das summierte Spektrum schafft eine bessere Genauigkeit.

Auch die Diffusionsverbreiterung bei dem Dekodieren kann in Betracht gezogen werden, und durch Dekonvolution mit einer Gauß-Kurve kann ein Mobilitätsspektrum mit höherer Auflösung erhalten werden.

Die beiden mathematischen Dekonvolutionen - diejenige mit dem aufgeprägten Schaltmuster und diejenige mit der Diffusionskurve - können in einem einzelnen Dekonvolutionsschritt durchgeführt werden.

**Bezugszeichenliste:**

10    Spektrometer
11    Laser
12a    Elektrode
12b    Elektrode
13    Ionenkollektor
14a    Spiegel
14b    Spiegel
15    Reflektionspunkte
16    Gehäuse
17    Gaseinlass
18    Gasauslass
19a    Fenster
19b    Fenster
21    Innenraum
100    Detektions- und/oder Analyseeinrichtung
102    Laservorrichtung
104    Codierungs- und/oder Modulationseinrichtung
106    Laserionisationsmobilitätsspektrometrievorrichtung
108    Ionisationsquelle
120    Laserpulsfolge
122    Laserpuls
124    Intervall
126    EIN-Phase
128    AUS-Phase
130    Hadamard-Muster
134    Fouriertransformation
136    Zeitdomäne
140    Fouriertransformationsmuster
B    Beschleunigungsstrecke
G    zu untersuchendes Gas
K    Konzentrationsbereich
S    Laserstrahl

**Patentansprüche**

1.    Ionisationsverfahren zum Ionisieren eines mittels Ionenmobilitätsspektrometrie zu untersuchenden Analyts durch Pulse (122) einer Ionisationsstrahlung (S), **dadurch gekennzeichnet, dass** eine Pulsfolge (120) mit einem vorbekannten zeitlich variablen quasi-zufälligen Aufprägungsmuster (130) oder mit einem vorbekannten zeitlich variablen Aufprägungsmuster moduliert wird, wobei das vorbekannte zeitlich variable Aufprägungsmuster mit sich fortlaufend verändernder Frequenz zur Fourier-Codierung ausgebildet ist und bei Verwendung des vorbekannten zeitlich variablen Aufprägungsmusters Signale im Frequenzbereich durch Einsatz von periodisch erzeugten Pulsen (122) und wenigstens einem sich entsprechend öffnenden Empfangsgate gemessen werden.

2.    Ionisationsverfahren nach Anspruch 1, **dadurch gekennzeichnet,** **dass** die ionisierende Pulsfolge (120) binär moduliert wird.

3.    Ionisationsverfahren nach Anspruch 2, **dadurch gekennzeichnet,**

   a) **dass** eine Pulsfolge (120) mit einer Pulsfrequenz in äquidistanten zeitlichen Intervallen (124) mit einer Intervallfrequenz moduliert wird, wobei die Pulsfrequenz gleich oder größer als die Intervallfrequenz ist, insbesondere ein ganzzahliges Vielfaches der Intervallfrequenz ist, und wobei jedes Intervall entweder eine EIN-Phase (126), in der wenigstens ein Puls (122) erzeugt wird, oder eine AUS-Phase (128), in der keine Pulse (122) erzeugt werden, darstellt, wobei die Folge von EIN-Phasen und AUS-Phasen nach einem vorbekannten quasi-zufälligen Muster, insbesondere einem Hadamard-Muster, erzeugt wird, oder

   b) **dass** eine Folge von Intervallen (124) mit einer Intervallfrequenz generiert wird, wobei in der Folge von Intervallen (124) EIN-Phasen (126), in denen wenigstens ein Puls (122) erzeugt wird, und AUS-Phasen (128), in denen keine Pulse erzeugt werden, miteinander abwechseln, wobei die Intervallfrequenz zum Erhalt eines Frequenzspektrums verändert wird.

4.    Ionisationsverfahren nach einem der voranstehenden Ansprüche, **dadurch gekennzeichnet,** **dass** das Ionisieren mittels eines gepulsten Lasers (11) erfolgt, dessen zeitliche Abfolge von Laserpulsen (120) mit dem Aufprägungsmuster (130, 140) moduliert wird.

5.    Ionisationsverfahren nach Anspruch 4, **dadurch gekennzeichnet,** **dass** der Laser (11) Laserpulse (122) mit einer Repetitionsrate von ca. 1 kHz bis ca. 500 MHz aussendet und/oder **dass** der Laser (11) als Ionisationsquelle (108) und Codierungs- oder Modulationseinrichtung (104) verwendet wird.

6.    Ionisationsverfahren nach einem der Ansprüche 4 oder 5, **dadurch gekennzeichnet,** **dass** eine Laservorrichtung (102) verwendet wird, die eine Erzeugung willkürlicher Laserpulsfolgen (122) mit einem direkten Triggern einzelner Pulse (120) erlaubt.

**7.** Ionenmobilitätsspektrometrieverfahren zur Bestimmung eines Analyts mittels Ionenmobilitätsspektrometrie,
**dadurch gekennzeichnet,**
**dass** zur Ionisierung des Analyts ein Ionisationsverfahren nach einem der voranstehenden Ansprüche verwendet wird und dass ein nach Durchlaufen einer Messstrecke gemessener Ionenstrom unter Verwendung des Aufprägungsmusters (130, 140) demoduliert wird.

**8.** Ionenerzeugungsvorrichtung für ein Ionenmobilitätsspektrometer, mit einer gepulsten Ionisationsstrahlungsquelle (102) und mit einer Codierungs- oder Modulationseinrichtung (104), die zur Codierung und/oder Modulation einer Pulsfolge (120) der Ionisationsstrahlungsquelle (102) ausgebildet ist,
**dadurch gekennzeichnet, dass**
die Codierungs- oder Modulationseinrichtung (104) ausgebildet ist, die Pulsfolge (120) mit einem vorbekannten zeitlich variablen quasi-zufälligen Aufprägungsmuster (130) oder mit einem vorbekannten zeitlich variablen Aufprägungsmuster (140) zu modulieren, wobei das zeitlich variable Aufprägungsmuster mit sich fortlaufend verändernder Frequenz zur Fourier-Codierung und derart ausgebildet ist, dass bei Verwendung des vorbekannten zeitlich variablen Aufprägungsmusters Signale im Frequenzbereich durch Einsatz von periodisch erzeugten Pulsen (122) und wenigstens einem sich entsprechend öffnenden Empfangsgate messbar sind.

**9.** Ionenerzeugungsvorrichtung nach Anspruch 8,
**dadurch gekennzeichnet,**
**dass** die Codierungs- oder Modulationseinrichtung (102) zum Triggern der Pulserzeugung derart, dass die Pulsfolge (120) binär moduliert ist, ausgebildet ist.

**10.** Ionenerzeugungsvorrichtung nach Anspruch 9,
**dadurch gekennzeichnet,**
**dass** die gepulste Ionisationsstrahlungsquelle (102) zum Erzeugen einer Pulsfolge (120) mit einer Pulsfrequenz ausgebildet ist und dass die Codierungs- oder Modulationseinrichtung (104) zum EIN- und AUS-Schalten dieser Erzeugung der Pulsfolge (122) ausgebildet ist.

**11.** Ionenerzeugungsvorrichtung nach Anspruch 10,
**dadurch gekennzeichnet,**

a) **dass** die Codierungs- oder Modulationseinrichtung (104) zum EIN- und AUS-Schalten der Pulsfolge (120) in äquidistanten zeitlichen Intervallen mit einer Intervallfrequenz ausgebildet ist, welche Intervallfrequenz gleich oder kleiner als die Pulsfrequenz ist, insbesondere derart dass die Pulsfrequenz ein ganzzahliges Vielfaches der Intervallfrequenz ist, und dass die Codierungs- oder Modulationseinrichtung (104) zum Erzeugen einer Folge von EIN-Phasen (126), in der wenigstens ein Puls erzeugt wird, und AUS-Phasen (128), in der keine Pulse erzeugt werden, derart ausgebildet ist, dass die Folge von EIN-Phasen und AUS-Phasen nach einem vorbekannten quasi-zufälligen Muster, insbesondere in einem Hadamard-Muster, erzeugbar ist, oder

b) **dass** die Codierungs- oder Modulationseinrichtung (104) zum abwechselnden EIN- und AUS-Schalten der Pulsfolge (122) mit einer Intervallfrequenz ausgebildet ist, die zum Erzeugen eines Frequenzspektrums veränderbar ist.

**12.** Ionenerzeugungsvorrichtung nach einem der Ansprüche 8 bis 11,
**dadurch gekennzeichnet,**
**dass** die gepulste Ionenstrahlerzeugungseinrichtung eine gepulste Laservorrichtung (102) ist oder eine solche aufweist.

**13.** Ionenerzeugungsvorrichtung nach Anspruch 12,
**dadurch gekennzeichnet,**
**dass** die Laservorrichtung (102) zum Erzeugen einer Laserpulsfolge (122) mit einer Repetitionsrate von ca. 1 kHz bis ca. 500 MHz ausgebildet ist und/oder
**dass** die Codierungs- oder Modulationseinrichtung (104) als insbesondere Softwareimplementierte Schaltung für die oder in der Laservorrichtung (102) ausgebildet ist.

**14.** Ionenmobilitätsspektrometer,
**gekennzeichnet durch** eine Ionenerzeugungsvorrichtung (108) nach einem der voranstehenden Ansprüche und eine Detektions- und/oder Analyseeinrichtung (100) zum Demodulieren oder Dekodieren eines gemessenen Ionenstromsignals unter Verwendung des Aufprägungsmusters (130, 140).

**15.** Ionenmobilitätsspektrometer nach Anspruch 14, **dadurch gekennzeichnet, dass** die Detektions- und/oder Analyseeinrichtung (100) eine Demodulator- oder Dekodiereinrichtung aufweist.

**Claims**

**1.** Ionization method for ionizing an analyte to be examined by means of ion mobility spectrometry by means of pulses (122) of an ionizing radiation (S),
**characterised in that**
a pulse sequence (120) is modulated with a known chronologically variable quasi-random application pattern (130) or with a known chronologically variable application pattern, wherein the known chronologically variable application pattern is formed with continuously changing frequency for Fourier coding and when using the known chronologically variable application pattern, signals in the frequency range are measured by means of using periodically generated pulses (122) and at least one receiving gate opening accordingly.

2. Ionization method according to claim 1, **characterised in**
   **that** the ionizing pulse sequence (120) is binary modulated.

3. Ionization method according to claim 2, **characterised in**

   a) **that** a pulse sequence (120) having a pulse frequency in equidistant chronological intervals (124) is modulated with an interval frequency, wherein the pulse frequency is equal to or greater than the interval frequency, in particular is an integer multiple of the interval frequency, and wherein each interval constitutes either an ON-phase (126), in which at least one pulse (122) is generated, or an OFF-phase (128), in which no pulses (122) are generated, wherein the sequence of ON-phases and OFF-phases is generated according to a known quasi-random pattern, in particular a Hadamard pattern, or
   b) **that** a sequence of intervals (124) is generated with an interval frequency, wherein in the sequence of intervals (124) ON-phases (126), in which at least one pulse (122) is generated, and OFF-phases (128), in which no pulses are generated, alternate with one another, wherein the interval frequency is altered to attain a frequency spectrum.

4. Ionization method according to any of the preceding claims,
   **characterised in**
   **that** the ionization is carried out by means of a pulsed laser (11), the chronological sequence of laser pulses (120) of which is modulated with the application pattern (130, 140).

5. Ionization method according to claim 4, **characterised in**
   **that** the laser (11) transmits laser pulses (122) with a repetition rate of approximately 1 kHz to approximately 500 MHz
   and/or
   **that** the laser (11) is used as ionization source (108) and coding or modulating means (104).

6. Ionization method according to any of claims 4 or 5, **characterised in**

**that** a laser device (102) is used which allows a generation of random laser pulse sequences (122) with a direct triggering of individual pulses (120).

7. Ion mobility spectrometry method for determining an analyte by means of ion mobility spectrometry, **characterised in**
   **that** for ionizing the analyte, an ionization method according to any of the preceding claims is used, and that an ion flow measured after passing through a measuring section is demodulated by using the application pattern (130, 140).

8. Ion generating device for an ion mobility spectrometer, having a pulsed ionization radiation source (102) and having a coding or modulating means (104) which is configured for the coding and/or modulation of a pulse sequence (120) of the ionization radiation source (102), **characterised in that** the coding or modulating means (104) is configured to modulate the pulse sequence (120) with a known chronologically variable quasi-random application pattern (130) or with a known chronologically variable application pattern (140), wherein the chronologically variable application pattern is designed with continuously changing frequency for Fourier coding, and is designed such that when using the known chronologically variable application pattern, signals in the frequency range are measured by means of using periodically generated pulses (122) and at least one receiving gate opening accordingly.

9. Ion generating device according to claim 8, **characterised in**
   **that** the coding or modulating means (102) is configured for triggering the pulse generation such that the pulse sequence (120) is binary modulated.

10. Ion generating device according to claim 9, **characterised in**
    **that** the pulsed ionization radiation source (102) is configured for generating a pulse sequence (120) with a pulse frequency and that the coding or modulating means (104) is configured for switching this generation of the pulse sequence (122) ON and OFF.

11. Ionization method according to claim 10, **characterised in**

    a) **that** the coding or modulating means (104) for switching the pulse sequence (120) ON and OFF in equidistant chronological intervals is configured with an interval frequency, which interval frequency is equal to or less than the pulse frequency, in particular in such a manner that the pulse frequency is an integer multiple of the interval frequency, and that the coding or modulating means (104) for generating a sequence of ON-phases (126), in which at least one pulse is generated, and OFF-phases (128), in which no pulses are generated, is configured such that the sequence of ON-phases and OFF-phases is generated according to a known quasi-random pattern, in particular a Hadamard pattern, or

b) **that** the coding or modulating means (104) is formed for the alternating switching ON and OFF of the pulse sequence (122) with an interval frequency, which is alterable for the generation of a frequency spectrum.

12. Ion generating device according to any of claims 8 to 11,
**characterised in**
**that** the pulsed ionization radiation source is a pulsed laser device (102) or has one such.

13. Ion generating device according to claim 12,
**characterised in**
**that** the laser device (102) is configured for the generation of a laser pulse sequence (122) with a repetition rate of approximately 1 kHz to approximately 500 MHz
and/or
**that** the coding or modulating means (104) is configured as in particular software-implemented circuit for the or in the laser device (102).

14. Ion mobility spectrometer,
**characterised by** an ion generating device (108) according to any of the preceding claims and a detection and/or analysis device (100) for demodulating or decoding a measured ion flow signal using the application pattern (130, 140).

15. Ion mobility spectrometer according to claim 14,
**characterised in that** the detection and/or analysis device (100) has a demodulating means or decoding means.

**Revendications**

1. Procédé d'ionisation pour l'ionisation d'un analyte à analyser par spectroscopie à mobilité ionique par impulsions (122) d'un rayonnement d'ionisation (S),
**caractérisé en ce que**
une séquence d'impulsions (120) est modulée avec un modèle d'application (130) quasi aléatoire variable dans le temps préalablement connu ou avec un modèle d'application variable dans le temps préalablement connu, dans lequel le modèle d'application variable dans le temps préalablement connu est réalisé avec une fréquence variant continuellement pour le codage de Fourier et, lors de l'utilisation du modèle d'application variable dans le temps préalablement connu, des signaux sont mesurés dans la plage de fréquences par utilisation d'impulsions (122) produites périodiquement et d'au moins une grille de réception s'ouvrant en conséquence.

2. Procédé d'ionisation selon la revendication 1,
**caractérisé en ce**
**que** la séquence d'impulsions (120) ionisante est modulée binairement.

3. Procédé d'ionisation selon la revendication 2,
**caractérisé en ce**

a) **qu'**une séquence d'impulsions (120) avec une fréquence d'impulsion est modulée à intervalles (124) temporels équidistants avec une fréquence d'intervalle, dans lequel la fréquence d'impulsion est égale ou supérieure à la fréquence d'intervalle, en particulier un multiple entier de la fréquence d'intervalle, et dans lequel chaque intervalle représente soit une phase MARCHE (126), dans laquelle au moins une impulsion (122) est produite, soit une phase ARRÊT (128), dans laquelle aucune impulsion (122) n'est produite, dans lequel la séquence de phases MARCHE et de phases ARRÊT est produite selon un modèle quasi aléatoire préalablement connu, en particulier un modèle Hadamard, ou

b) **qu'**une séquence d'intervalles (124) avec une fréquence d'intervalle est produite, dans lequel, dans la séquence d'intervalles (124), des phases MARCHE (126), dans lesquelles au moins une impulsion (122) est produite, et des phases ARRÊT (128), dans lesquelles aucune impulsion n'est produite, s'alternent, dans lequel la fréquence d'intervalle est modifiée pour le maintien d'un spectre de fréquences.

4. Procédé d'ionisation selon l'une quelconque des revendications précédentes,
**caractérisé en ce**
**que** l'ionisation a lieu au moyen d'un laser (11) pulsé, dont la séquence temporelle d'impulsions de laser (120) est modulée avec le modèle d'application (130, 140).

5. Procédé d'ionisation selon la revendication 4,
**caractérisé en ce**
**que** le laser (11) émet des impulsions de laser (122) avec un taux de répétition d'environ 1 kHz à environ 500 MHz
et/ou
**que** le laser (11) est utilisé en tant que source d'ionisation (108) et dispositif de codage ou de modulation (104).

**6.** Procédé d'ionisation selon l'une quelconque des revendications 4 ou 5,
**caractérisé en ce**
**qu'**un dispositif laser (102) est utilisé, qui permet une production de séquences d'impulsions de laser (122) arbitraires avec un déclenchement direct d'impulsions (120) individuelles.

**7.** Procédé de spectroscopie à mobilité ionique pour la détermination d'un analyte par spectroscopie à mobilité ionique,
**caractérisé en ce**
**qu'**un procédé d'ionisation selon l'une quelconque des revendications précédentes est utilisé pour l'ionisation de l'analyte et qu'un courant d'ions mesuré après le passage d'une distance de mesure est démodulé en utilisant le modèle d'application (130, 140).

**8.** Dispositif de production d'ions pour une spectroscopie à mobilité ionique, avec une source de rayonnement d'ionisation pulsée (102) et avec un dispositif de codage ou de modulation (104), qui est réalisé pour le codage et/ou la modulation d'une séquence d'impulsions (120) de la source de rayonnement d'ionisation (102), **caractérisé en ce que**
le dispositif de codage ou de modulation (104) est réalisé pour moduler la séquence d'impulsions (120) avec un modèle d'application (130) quasi aléatoire variable dans le temps préalablement connu ou avec un modèle d'application (140) variable dans le temps préalablement connu, dans lequel le modèle d'application variable dans le temps est réalisé avec une fréquence variant continuellement pour le codage de Fourier et de sorte que, lors de l'utilisation du modèle d'application variable dans le temps préalablement connu, des signaux puissent être mesurés dans la plage de fréquences par utilisation d'impulsions (122) produites périodiquement et d'au moins une grille de réception s'ouvrant en conséquence.

**9.** Dispositif de production d'ions selon la revendication 8,
**caractérisé en ce**
**que** le dispositif de codage ou de modulation (102) est réalisé pour le déclenchement de la production d'impulsions de sorte que la séquence d'impulsions (120) soit modulée binairement.

**10.** Dispositif de production d'ions selon la revendication 9,
**caractérisé en ce**
**que** la source de rayonnement d'ionisation pulsée (102) est réalisée pour la production d'une séquence d'impulsions (120) avec une fréquence d'impulsion et que le dispositif de codage ou de modulation (104) est réalisé pour la mise en MARCHE et ARRÊT de cette production de la séquence d'impulsions (122).

**11.** Dispositif de production d'ions selon la revendication 10,
**caractérisé en ce**

a) **que** le dispositif de codage ou de modulation (104) est réalisé pour la mise en MARCHE et ARRÊT de la séquence d'impulsions (120) à intervalles temporels équidistants avec une fréquence d'intervalle, laquelle fréquence d'intervalle est égale ou inférieure à la fréquence d'impulsion, en particulier de sorte que la fréquence d'impulsion soit un multiple entier de la fréquence d'intervalle, et que le dispositif de codage ou de modulation (104) est réalisé pour la production d'une séquence de phases MARCHE (126), dans laquelle au moins une impulsion est produite, et de phases ARRÊT (128), dans laquelle aucune impulsion n'est produite, de sorte que la séquence de phases MARCHE et de phases ARRÊT puisse être produite selon un modèle quasi aléatoire préalablement connu, en particulier dans un modèle Hadamard,
ou
b) **que** le dispositif de codage ou de modulation (104) est réalisé pour la mise en MARCHE et ARRÊT alternante de la séquence d'impulsions (122) avec une fréquence d'intervalle, qui peut être modifiée pour la production d'un spectre de fréquences.

**12.** Dispositif de production d'ions selon l'une quelconque des revendications 8 à 11,
**caractérisé en ce**
**que** le dispositif de production de faisceaux d'ions pulsé est un dispositif laser pulsé (102) ou présente un tel dispositif.

**13.** Dispositif de production d'ions selon la revendication 12,
**caractérisé en ce**
**que** le dispositif laser (102) est réalisé pour la production d'une séquence d'impulsions de laser (122) avec un taux de répétition d'environ 1 kHz à environ 500 MHz
et/ou
**que** le dispositif de codage ou de modulation (104) est réalisé en tant que commutation en particulier mise en oeuvre par logiciel pour la ou dans le dispositif laser (102).

**14.** Spectroscopie à mobilité ionique,
**caractérisée par** un dispositif de production ionique (108) selon l'une quelconque des revendications précédentes et un dispositif de détection et/ou d'analyse (100) pour la démodulation ou le décodage d'un signal de courant d'ions mesuré en utilisant le modèle d'application (130, 140).

**15.** Spectroscopie à mobilité ionique selon la revendication 14,
**caractérisée en ce que** le dispositif de détection et/ou d'analyse (100) présente un dispositif de démodulation ou de décodage.

Fig. 1

Fig. 2

Fig. 3

Fig. 4

Fig. 4a

Fig. 4b

EP 2 483 911 B1

Fig. 5

Fig. 6

EP 2 483 911 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4707602 A
- EP 0848253 B1
- DE 19861106 B4
- DE 102007057374 A1
- DE 10247272 A1
- DE 19815436 B4
- DE 10306900 A1
- US 6300626 B1


**In der Beschreibung aufgeführte Nicht-Patentliteratur**

- **F. J. KNORR et al.** Fourier Transform Ion Mobility Spectrometry. *Analyti- cal Chemistry,* Februar 1985, vol. 57 (2), 402-406
- **F. J. KNORR.** Fourier Transform Time-of-Flight Mass Spectrometry. *Ana- lytical Chemistry,* vol. 58 (4), 690-694
- **M. MISAKIAN et al.** Drift tubes for characterizing atmospheric ion mobility spectra using ac, ac-pulse, and pulse time-of-flight measurement techniques. *Rev. Sei. Instrum.,* vol. 60 (4), 720-729
- **B. K. CLOWERS ; W. F. SIEMS ; H. H. HILLAND ; S. M. MASSICK.** Hadamard Transform Ion Mobility Spektrometry. *Anal. Chem.,* 2006, vol. 78, 44-51
- **R. A. DYER ; S. A. DYER.** *Right-Cyclic Hadamard Coding Schemes and Fast Fourier Transforms for Use in Computing Spectrum Estimates in Hadamard-Transform Spectrometry*
- **BRIAN H CLOWERS et al.** Pseudorandom sequence modifications for ion mobility orthogonal time-of-flight mass spectrometry. *Analytical Chemistry,* 01. April 2008, 2464-2473